(19) Europäisches Patentamt / European Patent Office / Office européen des brevets

(11) **EP 3 977 866 B1**

(12) **EUROPEAN PATENT SPECIFICATION**

(45) Date of publication and mention
of the grant of the patent:
**12.11.2025 Bulletin 2025/46**

(21) Application number: **21198391.1**

(22) Date of filing: **22.09.2021**

(51) International Patent Classification (IPC):
**A23L 27/10** (2016.01)    **A23L 27/24** (2016.01)

(52) Cooperative Patent Classification (CPC):
**A23L 27/10; A23L 27/25**

(54) **LIQUID SEASONING CONTAINING SOLID VEGETABLE INGREDIENTS**

FLÜSSIGES GEWÜRZ ENTHALTEND FESTEN PFLANZLICHEN BESTANDTEILEN

ASSAISONNEMENT LIQUIDE CONTENANT DES INGRÉDIENTS VÉGÉTAUX SOLIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2020 JP 2020165681**

(43) Date of publication of application:
**06.04.2022 Bulletin 2022/14**

(73) Proprietors:
• **Mizkan Holdings Co., Ltd.**
**Handa-shi, Aichi 475-8585 (JP)**
• **Mizkan Euro Ltd.**
**London, Greater London W4 5XS (GB)**

(72) Inventor: **COLEMAN, Nathan**
**Suffolk, IP32 6EN (GB)**

(74) Representative: **Mewburn Ellis LLP**
**Aurora Building**
**Counterslip**
**Bristol BS1 6BX (GB)**

(56) References cited:
WO-A1-2019/139096    JP-A- 2004 089 035
US-A1- 2019 387 778    US-A1- 2020 268 009

• DATABASE GNPD [online] MINTEL; 26 May 2020 (2020-05-26), ANONYMOUS: "Original Pickle", XP055890128, retrieved from https://www.gnpd.com/sinatra/recordpage/7647867/ Database accession no. 7647867
• DATABASE GNPD [online] MINTEL; 25 November 2019 (2019-11-25), ANONYMOUS: "Apple Cider Vinegar", XP055890131, retrieved from https://www.gnpd.com/sinatra/recordpage/7058525/ Database accession no. 7058525
• ANONYMOUS: "Making your own Branston Pickle", 14 September 2017 (2017-09-14), XP055890203, Retrieved from the Internet <URL:https://johnspiers.co.uk/blogs/recipes/posts/making-your-own-branston-pickle> [retrieved on 20220210]
• SUZANNE COWDEN: "Shallot-Dijon Vinaigrette", 12 July 2020 (2020-07-12), XP093254076, Retrieved from the Internet <URL:https://www.flourarrangements.org/2020/07/shallot-dijon-vinaigrette/>

## Description

### FIELD

The present invention relates to a liquid seasoning containing solid ingredients of vegetable.

The invention is defined by the appended claims 1-13.

### BACKGROUND

Along with an increasing population of vegans, who do not eat meat, dairy products, or eggs, there is a growing demand for vegan foods, which consist only of plant-derived ingredients. However, quite a few vegans desire to enjoy meals having the same flavor, texture, and aftertaste as non-vegan foods, which contain dairy products and animal-derived foodstuffs. Accordingly, there is a demand for a technique for reproducing the flavor and the like of non-vegan foods using only plant-derived foods.

An example is cheese-and-pickle sandwiches, which are popular meals especially in the UK. Vegans usually cannot eat this sandwich, since it usually contains dairy products, such as cheese and butter, and Worcestershire sauce, which contains animal-derived ingredients such as meat extract and fish component. Although there are vegan sandwiches imitating cheese-and-pickle sandwiches prepared by simply replacing dairy products and animal-derived ingredients with plant-derived substitutes, such an imitation sandwich usually lacks the rich flavor, texture, and/or aftertaste characteristic of dairy products or animal-derived ingredients, and is therefore far inferior to a real cheese-and-pickle sandwich. Accordingly, there is a demand for a technique for reproducing the rich flavor, texture, and/or aftertaste of cheese-and-pickle sandwiches using only plant-derived foodstuffs.

The product "Apple cider vinegar" from Mizkan Euro, sold in the UK from November 2019, according to the database Mintel (see its ID 7058525), is a seasoning comprising 56% concentrated apple juice and 44% apple cider vinegar.

### SUMMARY

An objective of the present invention is to provide a novel technique that can improve the palatability of a vegetarian or vegan food, which consists only of plant-derived ingredients, by adding a rich flavor, texture, and/or aftertaste like a dairy product or animal-derived ingredient.

The present inventors conducted extensive study, and have arrived at an idea of preparing a liquid seasoning comprising apple vinegar, apple juice, and solid ingredients of vegetable, adjusting the contents of diethyl succinate and benzaldehyde therein to within their respective specific ranges, and adjusting the acetic acidity to within a specific range, and have found that the resultant liquid seasoning can a rich flavor, texture, and/or aftertaste like a dairy product or animal-derived ingredient to a vegetarian or vegan food, which consists only of plant-derived ingredients, whereby the palatability of the vegetarian or vegan food is improved.

### EFFECTS

The novel liquid seasoning according to the present invention can improve the palatability of a vegetarian or vegan food, which consists only of plant-derived ingredients, by adding a rich flavor, texture, and/or aftertaste like a dairy product or animal-derived ingredient.

### EMBODIMENTS

The invention will now be described in greater detail by reference to specific embodiments thereof. However, it is to be understood that the invention should in any way be restricted to the following embodiments, and various modifications thereof may be implemented.

An aspect of the present invention provides a liquid according to claim 1.

The type of apple vinegar used is not limited, but may preferably be apple vinegar produced via fermentation, or via acetic acid fermentation. The specific method for producing apple vinegar via fermentation is not limited, but from the viewpoint of uniformity of quality, it may preferably be a process in conformity with: the standards for cider vinegar prescribed in British Standards BS EN 13188: 2000 2.3.3; or the standards for brewed vinegar prescribed in Japanese Agricultural Standards. There are no restrictions on the raw materials for the apple vinegar. Examples include: inorganic salts such as phosphoric salts and ammonium salts, which are nutrient sources for fermentation of acetic acid bacteria; and various sugars such as honey, sugar, and liquid sugar. Various food additives can also be used.

The apple vinegar used can be produced by any conventional methods. Examples of fermentative methods (preferably methods using acetic acid fermentation) include: surface fermentation using a wooden pail; deep fermentation; and filling tower fermentation. Examples of synthetic methods include: adding apple juice to chemically synthesized glacial acetic acid. According to the present invention, fermentative methods are preferred, since the resulting vinegar can contain various components derived from fermentation. The fermented apple vinegar may preferably be used without having undergone the treatment for removing the acetobacter used for fermentation (e.g., filtration), i.e., used in the state of containing the acetobacter, because the vinegar can exhibit natural cloudiness. The liquid seasoning of the present invention may contain either a single kind of apple vinegar or any combination of two or more kinds of apple vinegar at any ratios.

The mass ratio of the apple vinegar relative to the liquid seasoning is 0.5 % by mass or more, or 1 % by mass or more, or 1.5 % by mass or more, and 10 % by mass or less, or 7 % by mass or less, or 5 % by mass or less.

The type of the apple juice used is not limited, and may be either unconcentrated (straight) juice or concentrated juice. When concentrated apple juice is used, it may preferably have been produced according to a method in conformity with the standards for fruit beverages prescribed in Japanese Agricultural Standards. The concentration ratios of apple juice mentioned herein should preferably be measured based on the standards for concentrated apple juice prescribed in Japanese Agricultural Standards, and apple juice equivalent to Brix 10 should be considered as unconcentrated (straight) juice. The concentrated apple juice may or may not be a turbid juice containing insoluble solid contents derived from dietary fibers of apples (hereinafter also referred to as "pulp content") which give a natural turbidity to the apple juice. The method for measuring the pulp content in the concentrated apple juice will be described in the Examples below. The liquid seasoning of the present invention may contain either a single kind of apple juice or any combination of two or more kinds of apple juice at any ratios.

The mass ratio of the apple juice relative to the liquid seasoning is 0.8 % by mass or more, or 1.5 % by mass or more, or 2.2 % by mass or more, and 16 % by mass or less, or 12 % by mass or less, or 8 % by mass or less. The mass ratio of the apple juice to the liquid seasoning herein may be calculated with the concentration rate of the apple juice not being taken into consideration, i.e., calculated by simply dividing the mass of the apple juice used by the mass of the liquid seasoning .

According to one embodiment of the present invention, when the liquid seasoning of the present invention contains apple vinegar and apple juice, the mass ratio of the apple juice to the apple vinegar may be, although not limited to, preferably 1.0 by mass or more, or 1.2 by mass or more, and preferably 5.0 by mass or less, or 4.0 by mass or less. Adjusting the mass ratio to the lower limit mentioned above or higher allows for adding a mellow flavor derived from apple to the liquid seasoning. On the other hand, adjusting the mass ratio to the upper limit mentioned above or lower serves to harmonize the sourness of the apple vinegar with the apple flavor in the liquid seasoning. The mass ratio of the apple juice to the apple vinegar herein may be calculated with the concentration rate of the apple juice not being taken into consideration, i.e., calculated by simply dividing the mass of the apple juice used by the mass of the apple vinegar used.

The types of vegetables used for the liquid seasoning of the present invention as solid ingredients are not limited. Examples of vegetables include: Japanese radish (daikon), radish, carrot, gobo burdock, rutabaga, beet (e.g., beet root), parsnip, turnip, sweet potato, cassaba, yacon, taro, Japanese taro (satoimo), konjac root, lotus root, potato, purple yam, sunchoke, arrowhead tuber, shallot, garlic, Japanese leek (rakkyo), lily bulb (yurine), Asian fawnlily (katakuri), kale, yam, Japanese mountain yam (yamanoimo), Chinese yam (nagaimo), onion, asparagus, spikenard (udo), cabbage, lettuce, spinach, field mustard (abrana), Japanese mustard spinach (komatsuna), bok choy, chinese chive (nira), Welsh onion (negi), nozawana (Brassica rapa L. var. hakabura), leek, Japanese butterbur (fuki), potherb mustard (mizuna), tomato, eggplant, pumpkin, bell pepper, cucumber (e.g., gherkin), myoga, califlower, broccoli, bitter melon (goya, nigauri), okra, artichoke, zucchini, sugar beet, ginger, Japanese basil (shiso), and paprika. These may be used either singly or in any combination of two or more at any ratios.

The amount of the solid ingredients of vegetable in the liquid seasoning of the present invention is not limited. According to one embodiment of the present invention, the ratio of the vegetable solid ingredients having sizes of 3.0 mm or more may preferably be within a predetermined range. Specifically, from the viewpoint of adding sufficient flavor, taste, and/or feel of vegetables to the liquid seasoning, the ratio of the mass of the vegetable solid ingredients having sizes of 3.0 mm or more (i.e., 7.5-mesh on) in a state of being swelled in the liquid seasoning with respect to the mass of the liquid seasoning may preferably be 10% by mass or more, or 15% by mass or more, or 20% by mass or more. On the other hand, from the viewpoint of reducing the raw smell of vegetables, the upper limit of this mass ratio may preferably be 70% by mass or less, 60% by mass or less, or 50% by mass or less.

The statement "X-mesh pass" herein (where X is an integer) refers to ingredients that fall through a "X-mesh" sieve, which is defined as a sieve having opening of a predetermined opening size of X under the Japanese Industrial Standards (JIS), and the statement "X-mesh on" is refers to ingredients that do not fall through, but remain on, a "X-mesh" sieve.

The acetic acidity of the liquid seasoning is 1.5% (w/v) or more, preferably 1.55% (w/v) or more, more preferably 1.6% (w/v) or more. If the acetic acidity is below the lower limit mentioned above, the fresh sourness derived from acetic acid may not be sufficiently felt, and the sweetness may remain as aftertaste. On the other hand, the acetic acidity of the liquid seasoning may be 3.0% (w/v) or less, preferably be 2.5% (w/v) or less, more preferably be 2.0% (w/v) or less. If the acetic acidity exceeds the upper limit mentioned above, the abundance of acetic acid may give so strong irritation to the threat as to be masked by various other apple-derived components.

The acetic acidity herein may be measured in accordance with the standards for brewed vinegar prescribed in the Japanese Agricultural Standards. Specifically, a sample is titrated with a sodium hydroxide solution until the pH reaches 8.2, and the amount of sodium hydroxide solution used is converted into the acetic acid content in the sample, from which the acidity is then calculated. The titration may be carried out either manually or using an automatic titrator. It should be noted that the acetic acidity determined in accordance with the method mentioned above may not correspond strictly to the acidity of acetic acid in the sample, but may be the sum of the acidity of acetic acid in the sample and the acidity of other organic acids (such as citric acid) in the sample as calculated on the acetic acid basis.

The liquid seasoning of the present invention contains 2-methoxy-4-ethylphenol and diethyl succinate, and may optionally also contain 6-methyl-5-hepten-2-one (these three compounds may be collectively referred to herein as "specific flavor compounds").

The content of 2-methoxy-4-ethylphenol in the liquid seasoning of the present invention is 1.0 $\mu$g/L or more, preferably 1.5 $\mu$g/L or more, more preferably 2.0 $\mu$g/L or more, still more preferably 2.5 $\mu$g/L or more. If the content of 2-methoxy-4-ethylphenol is below the lower limit mentioned above, the abundance of acetic acid may irritate the threat, while a feel of maturity may not be imparted sufficiently. On the other hand, the content of 2-methoxy-4-ethylphenol in the liquid seasoning of the present invention is 20 $\mu$g/L or less, preferably 18 $\mu$g/L or less, more preferably 16 $\mu$g/L or less, still more preferably 14 $\mu$g/L or less. If the content of 2-methoxy-4-ethylphenol exceeds the upper limit mentioned above, the pleasant flavor of apples may be suppressed, which may cause discomfort in the flavor.

The content of diethyl succinate in the liquid seasoning of the present invention is 10 $\mu$g/L or more, preferably 15 $\mu$g/L or more, more preferably 20 $\mu$g/L or more, still more preferably 25 $\mu$g/L or more. If the content of diethyl succinate is below the lower limit mentioned above, the feel of fermented fruit may not be sufficiently imparted. The content of diethyl succinate in the liquid seasoning of the present invention is 200 $\mu$g/L or less, preferably 180 $\mu$g/L or less, more preferably 160 $\mu$g/L or less, still more preferably 140 $\mu$g/L or less. If the content of diethyl succinate exceeds the upper limit mentioned above, the pleasant acidity of apple vinegar may be suppressed, which may cause discomfort in the flavor.

The ratio (y/x) of the content (y) of diethyl succinate to the content (x) of 2-methoxy-4-ethylphenol in the liquid seasoning of the present invention may preferably be 1.0 or more, more preferably 2.0 or more. The above is more preferable. If the value of the ratio (y/x) is below the lower limit mentioned above, the abundance of diethyl succinate may prevent 2-methoxy-4-ethylphenol from imparting the feel of maturity. The ratio (y/x) may preferably be 15 or less, more preferably 13 or less. If the value of the ratio (y/x) exceeds the upper limit mentioned above, the abundance of 2-methoxy-4-ethylphenol may prevent diethyl succinate from imparting the feel resulting from fermentation.

When the liquid seasoning of the present invention contains 6-methyl-5-heptene-2-one, the content thereof may preferably be 0.2 $\mu$g/L or more, more preferably 0.3 $\mu$g/L or more, still more preferably 0.4 $\mu$g/L or more. If the content of 6-methyl-5-heptene-2-one is below the lower limit mentioned above, the mellow fruit flavor may not be sufficiently imparted to the liquid seasoning. On the other hand, the content of 6-methyl-5-heptene-2-one may preferably be 4.0 $\mu$g/L or less, more preferably 3.5 $\mu$g/L or less, still more preferably 3.0 $\mu$g/L or less. If the content of 6-methyl-5-heptene-2-one exceeds the upper limit mentioned above, the scent of 6-methyl-5-heptene-2-one may be felt so strongly as to render the flavor of the liquid seasoning uncomfortable.

When the liquid seasoning of the present invention contains 6-methyl-5-heptene-2-one, the content of 2-methoxy-4-ethylphenol (x) and the content of 6-methyl-5-heptene-2-one (z) may preferably satisfy the relationship such that the value calculated via Formula 1 below be within a predetermined range.

$$x/10z \qquad \text{Formula 1}$$

Specifically, the value calculated via Formula 1 above may preferably be 0.1 or more, more preferably 0.5 or more. If this value is below the lower limit mentioned above, the abundance of 6-methyl-5-heptene-2-one may prevent 2-methoxy-4-ethylphenol from imparting the feel of maturation sufficiently to the liquid seasoning. On the other hand, the value calculated via Formula 1 above may preferably be 10 or less, more preferably 5 or less. When this value exceeds the upper limit mentioned above, the content of 6-methyl-5-heptene-2-one may be so law as compared with 2-methoxy-4-ethylphenol that the natural sweet flavor of apples may not be felt sufficiently.

The above-mentioned specific flavor compounds (2-methoxy-4-ethylphenol and diethyl succinate, optionally with 6-methyl-5-hepten-2-one) may be incorporated into the liquid seasoning of the present invention in accordance with any method. An example is to add each of these specific flavor compounds to the liquid seasoning as a pure compound or in the form of a substance containing the specific flavor compounds. Another example is to incorporate these specific flavor compounds via fermentation in the course of production of the liquid seasoning. A preferred method is to incorporate these specific flavor compounds into the liquid seasoning by adjusting the ratios of these specific flavor compounds in the apple vinegar and/or in the apple juice via fermentation, since this method allows for incorporation of not only the specific flavor compounds but also various other flavor compounds which may contribute to the feel of maturity. The contents of the specific flavor compounds in a liquid seasoning sample may be measured by treating the sample via the star bar sorptive extraction (SBSE) method and then subjecting it to the measurement using a gas chromatography/mass spectrometry (GC/MS) apparatus. A specific example of measurement methods will be described in the Examples below.

The liquid seasoning of the present invention may preferably have, in the form of a 10-fold diluted solution with water, an absorbance at a wavelength of 430 nm within a predetermined range. Specifically, the absorbance of a 10-fold aqueous diluted solution of the liquid seasoning at a wavelength of 430 nm may preferably be, although not limited to, 0.45 or higher, or 0.46 or higher, or 0.47 or higher. The upper limit of the absorbance is not limited, but may be 0.60 or lower, or 0.58 or lower, or 0.56 or lower. The absorbance of a 10-fold aqueous diluted solution of a liquid seasoning herein can be determined by diluting the liquid seasoning with distilled water by 10 fold and then measuring the absorbance of the diluted solution at a wavelength of 430 nm using a spectrophotometer such as UV-1800 (Shimadzu).

According to one embodiment of the present invention, the liquid seasoning of the present invention may optionally contain one or more spices selected from: cardamom, black pepper, nutmeg, and ginger. According to one embodiment of the present invention, the ratio of the spices selected from the above group relative to the total mass of the liquid seasoning may be, although not limited to, preferably 0.01 % by mass or more, or 0.05 % by mass or more, or 0.1 % by mass or more, and preferably 5 % by mass or less, or 4 % by mass or less, or 3 % by mass or less.

According to one embodiment of the present invention, the liquid seasoning of the present invention may contain one or more other components. Examples of such other components include: taste/flavor components such as sugars, high-sweetness sweeteners, amino acid-based seasonings, nucleic acid-based seasonings, organic acid-based seasonings, flavor ingredients, umami seasonings, alcoholic beverages, flavor oils, flavors, spice extracts; and various additives such as stabilizers, pH regulators, and colorants. These may be used either singly or in any combination of two or more at any ratios. The content of these components is not limited, and can be appropriately determined depending on the intended use.

According to one embodiment of the present invention, the liquid seasoning of the present invention may preferably not contain, or substantially contain, any components of animal origin. The "components of animal origin" herein refers to components (such as organic materials) derived from various animals (e.g., Vertebrates such as mammals, birds, reptiles, amphibians, and fish; and Invertebrates such as mollusks, cnidarians, and arthropods). Examples of components of animal origin include, although not limited to: meats such as pork, beef, chicken, mutton, and lamb; dairy products such as milk, butter, yogurt, and cream; eggs; and other materials derived from animals, such as animal proteins, animal fats, and animal lipids.

The liquid seasoning of the present invention is produced via a process according to claim 11 including: (i) preparing a first fraction as a liquid containing the apple vinegar and the apple juice; (ii) preparing a second fraction as a suspension containing solid ingredients of vegetable; and (iii) mixing the first and second fractions while (iv) adjusting the mass-to-volume ratios of specific flavor elements (2-methoxy-4-ethylphenol and diethyl succinate, and optionally 6-methyl-5-hepten-2-one) and also the acetic acidity of the mixture to within their respective ranges mentioned above.

The adjustment of the mass-to-volume ratios of specific flavor elements (2-methoxy-4-ethylphenol and diethyl succinate, and optionally 6-methyl-5-hepten-2-one) (step (iv) above) can be carried out at any time, for example, during step (i) and/or (ii), between steps (i) and (ii) and step (iii), during step (iii), or after step (iii), or any combination thereof. According to one embodiment of the present invention, this adjustment may be carried out, although not limited to, either (a) by adjusting the mass ratio of the specific flavor elements in the first and/or second fractions in advance such that the desired ratios can be achieved via mixing the first and second fractions (e.g., by adjusting the fermentation conditions for preparing the apple vinegar), and/or (b) by adding the specific flavor elements to the mixture of the first and second fractions to thereby achieve the desired ratios thereof.

The adjustment of the acetic acidity of the liquid seasoning (step (iv) above) can be carried out at any time, for example, during step (i) and/or (ii), between steps (i) and (ii) and step (iii), during step (iii), or after step (iii), or any combination thereof. According to one embodiment of the present invention, this adjustment may be carried out, although not limited to, (a) by adjusting the acetic acidity of the first and/or second fraction such that the desired the acetic acidity can be achieved via mixing the first and second fractions (e.g., by adjusting the fermentation conditions for preparing the apple vinegar), and/or (b) by adjusting the acetic acidity of the mixture after the mixing of the first and second fractions.

According to an embodiment, the step (ii) of preparing the second fraction as a suspension containing vegetable solid ingredients may preferably include heating the suspension containing vegetable solid ingredients, preferably in the presence of sugar. The heating temperature is not limited, but the suspension may preferably be heated to a temperature of 60 °C or higher, or 65 °C or higher, or 70 °C or higher, and usually 100 °C or lower, or 95 °C or lower, or 90 °C or lower. The heating time is also not limited, but the suspension may preferably be maintained at a temperature within or close to the temperature range mentioned above for a period of usually 35 minutes or more, or 40 minutes or more, or 45 minutes or more, and usually 120 minutes or less, or within 100 minutes or less, or within 80 minutes or less. When sugar is added to the suspension of vegetable solid ingredients, the sugar content in the suspension is not limited, but may preferably be 10% by mass or more, or 15% by mass or more, or 20% by mass or more, and 55% by mass or less, or 50% by mass or less, or 45% by mass or less, with respect to the mass of the suspension medium in which the vegetable solid ingredients coexist. It is deemed that providing such a heating step serves to make vegetable solid ingredients undergo an aminocarbonyl reaction (preferably with the coexisting sugar) and result in a rich aroma with a rounded sweetness and a tangy taste as will be described later, leading to the effects of the present invention. It is also deemed that such an aminocarbonyl reaction causes the second fraction to turn brown, which leads to an increase in the absorbance of a 10-fold aqueous diluted solution of the liquid seasoning at a wavelength of 430 nm as mentioned above.

The liquid seasoning of the present invention is used as a substitute for a liquid seasoning containing one or more components of animal origin, according to claim 7.

According to one embodiment of the present invention, the liquid seasoning may preferably be used for foods which do not contain any components of animal origin, such as vegetarian or vegan foods. The liquid seasoning of the present invention is advantageous when used in the manners mentioned above, since it can add to a rich flavor, texture, and/or aftertaste like a dairy product or animal-derived ingredient to such a vegetarian or vegan food, thereby improving the palatability of the vegetarian or vegan food.

## EXAMPLES

The present invention will then be explained in further details by reference to the examples below, which are presented for the purpose of illustration only and should in no way be construed as limiting the present invention.

## [1. Preparation and Analysis of Liquid Seasonings Containing Solid Vegetable Ingredients]

The liquid seasonings containing solid vegetable ingredients of Examples 1 to 4 and Comparative Example 1 were prepared according to the following procedure, and then subjected to characterization and sensory evaluation.

### (1-1) Preparation of liquid seasonings

The liquid seasoning of each of the Examples and Comparative Examples was prepared by (1) preparing a liquid seasoning base containing solid vegetable ingredients, (2) preparing an apple cider vinegar (a mixture of apple vinegar and apple juice), and (3) mixing the liquid seasoning base with the apple cider vinegar and/or water at specific ratios shown in Table 1 below. The details of the procedure of each step are explained below

### (1-1-1) Preparation of liquid seasoning base

(i) Vegetables solids were prepared by dicing 396 g of carrots, 340 g of rutabaga, 158 g of cauliflower and 430 g of onions to a size of approximately 3 mm.
(ii) The vegetable solids from (i) above were placed in a pan with 1300 g of syrup (containing 35% by mass of sugar and 7% by mass of salt in water) and heated at 80 °C for 60 minutes.
(iii) The heated vegetable solids from (ii) above in an amount of 760 g was, before being cooled, mixed with 520 g of the syrup (same as above) and 720 g of sauce (containing 10% by mass of the syrup (same as above), 8% by mass of dates paste, 1% by mass of spice mix, 0.5% by mass of lemon juice, 3% by mass of tomato paste, 24% by mass of sugar, 4% by mass of starch, and the balance of a mixture of acetic acid and water, with the acetate acidity of the seasoning as a whole being 4%), and the mixture was bottled as a liquid seasoning base.

### (1-1-2) Preparation of apple cider vinegar

Apple cider vinegar was prepared by mixing components (A), (b1) and (b2) below at mass ratios of 38.6: 36.1: 25.3.

(A) Apple vinegar: apple vinegar was produced according to a process complying with the standard for cider vinegar prescribed in British Standard BS EN 13188: 2000 2.3.3, and used after fermentation without removing the acetic bacteria cells via filtration. The acetic acidity of the apple vinegar was 10% (w/v)
(B) Apple juice: the following two types of apple juice were used.

(b1) Clarified apple juice: apple juice was concentrated, filtered to remove pulp almost completely, and adjusted to be Brix70 (equivalent to 7-fold concentration) before use. The pulp content was less than 0.1% (w/w).
(b2) Turbid apple juice: apple juice was concentrated, filtered to remove pulp partially, and adjusted to be Brix 40 (equivalent to 4-fold concentration) before use. The pulp content was about 5% (w/w).

The pulp content in the apple juice was measured by dispensing 1.0 g of each concentrated juice into a 1.5 mL Eppendorf tube, centrifugalizing it at 15000 rpm for 5 minutes at room temperature with a centrifuge (Kubota 3700; Kubota Shoji Co., Ltd.) and a rotor (Kubota AF-2724; Kubota Shoji Co., Ltd.), and measuring the wet mass of the residue excluding the supernatant.

**(1-1-3) Preparation of liquid seasonings mixing the liquid seasoning base with the apple cider vinegar**

The liquid seasoning base prepared above was mixed with the apple cider vinegar prepared above and/or water at the ratios shown in Table 1 below to thereby prepare a liquid seasoning containing solid vegetable ingredients according to each of the Examples and Comparative Example, which was then subjected to the characterization and the sensory evaluation explained below.

Table 1

|  | Component masses | | | Component percentages | |
|---|---|---|---|---|---|
|  | Seasoning base | Apple cider vinegar | Water | Apple vinegar | Apple juice |
|  | g | g | g | % | % |
| Comparative Example 1 | 35 | 0 | 4 | 0 | 0 |
| Example 1 | 35 | 2 | 2 | 1.98 | 3.15 |
| Example 2 | 35 | 4 | 0 | 3.96 | 6.29 |
| Example 3 | 32 | 2 | 2 | 2.14 | 3.42 |
| Example 4 | 39 | 2 | 2 | 1.8 | 2.86 |

**(1-2) Characterization of liquid seasonings**

**(1-2-1) Measurement of the content of solid ingredients for each size range**

The liquid seasoning of Example 1 was measured for the content of the solid vegetable ingredients for each size range in the swollen state. As a result, relative to the total amount of liquid seasoning, the ratio of the solid ingredients within the size range of from 8 to 20 mm (3 mesh on) was 0.4% by mass, the ratio of the solid ingredients within the size range of from 3 to 8 mm (3 mesh pass, 7.5 mesh on) was 41.1% by mass, and the ratio of the solid ingredients within the size range of from 0.5 to 3 mm (7.5 mesh pass, 30 mesh on) was 4.0% by mass.

**(1-2-2) Measurement of acetic acidity**

The liquid seasoning of each of the Examples and Comparative Example was titrated with 0.5 mol/L sodium hydroxide aqueous solution using an automatic acidity titrator COM-1600 (Hiranuma Sangyo) until the pH reached 8.2, The amount of sodium hydroxide solution used so far was measured and converted into the acetic acid content in the liquid seasoning, which was used for calculating the acetic acidity of the liquid seasoning.

**(1-2-3) Measurement of absorbance at 430 nm**

The liquid seasoning of each of the Examples and Comparative Example was diluted 10-fold with water and then filtered through a 0.45 micron filter to prepare a measurement sample. The absorbance of this sample at 430 nm was measured using Spectrophotometer UV-1800 (Shimadzu).

**(1-2-4) Measurement of specific flavor compound contents**

The liquid seasoning of each of the Examples and Comparative Example was measured for the contents of the specific flavor compounds, i.e., 2-methoxy-4-ethylphenol, diethyl succinate, and 6-methyl-5-hepten-2-one. The measurement was carried out using samples treated via the SBME method, using a gas chromatography/mass spectrometry (GC/MS) apparatus, in accordance with the following procedure.

The liquid seasoning of each of the Examples and Comparative Example was subjected to pretreatments (i) to (iv) below to prepare a measurement sample.

(i) An aliquot of 10 mL was collected from the liquid seasoning of each of the Examples and Comparative Example into a vial.
(ii) PDMS Twister (Gerstel K.K.; film thickness: 0.5 mm; length: 10 mm) was placed into the vial, and stirred for 60 minutes to adsorb components from the aliquot.
(iii) The supernatant was filtered off, and the PDMS Twister was rinsed with ion-exchanged water.
(iv) Water on the PDMS Twister was wiped off with Kimwipe to prepare a measurement sample.

The sample was then measured for the specific flavor compounds using Gerstel's 1D/2D switching GC/MS (GC part: HP7890 Series GC System, connected to LTM series II (both manufactured by Agilent Inc.) with an inlet TDU2 / CIS4 (Gerstel) and an autosampler: MPS (Gerstel).

Capillary columns used were: DB-WAX (length: 30 m; inner diameter: 250 $\mu$m; film thickness: 0.25 $\mu$m; adopted for LTM; Agilent Inc.) as a one-dimensional column; and DB-5 (length: 10 m; inner diameter: 180 $\mu$m; film thickness 0.4 $\mu$m; adopted for LTM; Agilent Inc.) as a two-dimensional column. Helium was used as the carrier gas.

Among the specific flavor compounds, 2-methoxy-4-ethylphenol and diethyl succinate were measured by one-dimensional analysis, and 6-methyl-5-hepten-2-one was measured by two-dimensional analysis.

Injection of each sample into the GC/MS was carried out using a PDMS Twister, which had undergone the pretreatments mentioned above. The injection conditions were as follows:

* CIS4:
Heated to 10 °C, maintained for 0.5 minutes, then heated up to 240 °C at 720 °C/min.
* TDU2:
Heated to 30 °C, maintained for 0.2 minutes, then heated up to 240 °C at 720 °C/min.

The measurement of 6-methyl-5-heptene-2-one was carried out as follows: the sample was injected into the one-dimensional column under the conditions mentioned above. Backflushing was carried out between the holding time of 14.5 and 17.5 minutes. The specific flavor compounds were introduced into the two-dimensional column for separation, and subjected to SIM analysis. The column oven conditions for DB-WAX (one-dimensional column) and DB-5 (two-dimensional column) were as follows:

*DB-WAX (one-dimensional column):
Maintained at 40 °C for 3 minutes, then heated up at 5 °C/min, and stopped heating at 48 minutes after the start of measurement.
*DB-5 (two-dimensional column):
Maintained at 40 °C for 18 minutes, then heated to 240 °C at 10 °C/min, and maintained at the temperature for 10 minutes.

The measurement of 2-methoxy-4-ethylphenol and diethyl succinate was carried out as follows: the sample was injected into the one-dimensional column under the conditions mentioned above, and the specific flavor compounds were separated on the one-dimensional column and subjected to SIM analysis. The column oven conditions for DB-WAX (one-dimensional column) were as follows:

*DB-WAX (one-dimensional column):
Maintained at 40 °C for 3 minutes, then heated to 240 °C at 5 °C/min, and maintained at the temperature for 7 minutes.

After the measurement of each sample on the selective ion monitoring (SIM) mode, the concentration of each specific flavor compound in the sample was calculated from the area for the quantitation ion measured for the standard of each specific flavor compound shown in Table 2 below. The concentration of each specific flavor compound in the liquid seasoning sample was calculated in consideration of the dilution rate with water for preparing each measurement sample.

Table 2

|  | Quantitation ion | Confirmation ion 1 | Confirmation ion 2 |
|---|---|---|---|
| 2-Methoxy-4-ethylphenol | 137 | 152 | 122 |
| Diethyl succinate | 101 | 129 | 128 |
| 6-Methyl-5-heptene-2-one | 108 | 111 | 126 |

**(1-3) Sensory evaluation of liquid seasonings**

The liquid seasonings of each Example and Comparative Example was subjected to sensory evaluation according to the following procedure.

Sensory evaluation was carried out by 6 sensory inspectors, who were selected for their superior results in sensory identification trainings, their experience in product development, their knowledge about the quality of foods such as taste and texture, and their ability to make an absolute evaluation for each sensory evaluation item.

The sensory evaluation items evaluated for each sample were "aroma," "tangy taste," and "overall evaluation." The "aroma" and "tangy taste" were each evaluated by the inspectors on the scale of from 1 to 5 indicated below. The scores of the 6 inspectors were averaged. The "overall evaluation" is the average score of the "aroma" (a rich aroma with a rounded sweetness) and "tangy taste" scores.

*Aroma:

5: Very good, with aroma quite strongly felt.
4: Good, with aroma strongly felt.
3: Medium, with aroma moderately felt.
2: Not very good, with aroma slightly felt.
1: Not good at all, with no aroma felt.

*Tangy taste:

5: Very good, with tangy taste quite strongly felt.
4: Good, with tangy taste strongly felt.
3: Medium, with tangy taste moderately felt.
2: Not very good, with tangy taste slightly felt.
1: Not good at all, with no tangy taste felt.

**(1-4) Results**

The results of the characterization and the sensory evaluation are shown in the tables below.

Table 3

| | Acetic acidity | Absorbance at 430nm | Specific flavor compounds | | |
|---|---|---|---|---|---|
| | | | 2-Methoxy-4-ethylphenol | Diethyl succinate | 6-Methyl-5-hepten-2-one |
| | | | μg/L | μg/L | μg/L |
| Comparative Example 1 | 1.41 | 0.492 | 0 | 0 | 0 |
| Example 1 | 1.62 | 0.498 | 4.256 | 36.153 | 0.666 |
| Example 2 | 1.91 | 0.503 | 8.513 | 72.308 | 1.333 |
| Example 3 | 1.63 | 0.496 | | | |
| Example 4 | 1.61 | 0.499 | | | |

Table 4

| | Sensory evaluation | | |
|---|---|---|---|
| | Aroma | Flavor (tangy) | Overall (average) |
| Comparative Example 1 | 4.17 | 3.83 | 4 |
| Example 1 | 4.33 | 4 | 4.17 |

(continued)

| | Sensory evaluation | | |
|---|---|---|---|
| | Aroma | Flavor (tangy) | Overall (average) |
| Example 2 | 4.17 | 4.67 | 4.42 |

The vegetable ingredient-containing liquid seasonings of Examples 1 and 2, which satisfied the requirements according to the present invention, were superior in overall evaluation as compared with the vegetable ingredient-containing liquid seasoning of Comparative Example 1, which did not satisfy the requirements according to the present invention.

**[2. Preparation of Sandwiches for Vegans using Liquid Seasonings Containing Solid Vegetable Ingredients and Evaluation thereof]**

**(2-1) Preparation of sandwiches using liquid seasonings**

The liquid seasonings of the Examples and Comparative Example mentioned above were used for preparation of sandwiches adopted for vegans. Specifically, the sandwiches of Comparative Preparation 1 and Preparations 1 to 4 were prepared by using the liquid seasoning and other foodstuffs for each of the Preparations and Comparative Preparation shown in Table 5 below in the amounts shown therein, and sandwiching them between two slices of bread (about 85 g). In addition, as a reference sandwich not for vegans, a sandwich of Reference Preparation was prepared by using general foodstuffs (containing dairy products and animal-derived components) and sandwiching them between two slices of bread similarly.

Aside from the liquid seasonings of Examples and Comparative Example mentioned above, the other foodstuffs shown in Table 5 are specified below:

| | |
|---|---|
| "Vegan cheddar": | ASDA Free From Mature Cheddar Alternative (Asda Stores Ltd.) |
| "Vegan mozzarella": | ASDA Free From Grated Mozzarella Alternative (Asda Stores Limited.) |
| "Vegan spread": | Flora Buttery 1kg (Upfield Holdings B.V.) |
| "Vegan Worcestershire sauce": | Biona Organic Worcester Sauce (Biona) |
| "General cheese 1": | Cathedral City Mature Cheddar 350G (Cathedral City) |
| "General cheese 2": | Tesco Mozzarella Grated 250G (Tesco Plc) |
| "General spread": | Anchor Unsalted Butter (Fonterra Co-operative Group Limited) |
| "General Worcestershire sauce": | Lea & Perrins Worcestershire sauce (Lea & Perrins, Inc.) |

Table 5

| Sandwich | Cheese | | | Sauce | | |
|---|---|---|---|---|---|---|
| | Vegan Cheddar | Vegan Mozzarella | Vegan Spread | Vegan liquid seasoning containing solid vegetable ingredients | | Vegan Worcestershire Sauce |
| | g | g | g | | g | g |
| Comparative preparation 1 | 27 | 31 | 33 | Comparative Example 1 | 35 | 4 |
| Preparation 1 | 27 | 31 | 33 | Example 1 | 37 | 2 |
| Preparation 2 | 27 | 31 | 33 | Example 2 | 39 | 0 |
| Preparation 3 | 27 | 31 | 33 | Example 3 | 34 | 2 |
| Preparation 4 | 27 | 31 | 33 | Example 4 | 41 | 2 |
| Reference preparation | General cheese 1 | General cheese 2 | General Spread | Comparative Example 1 | | General Worcestershire Sauce |
| | 27g | 31g | 33g | 35 g | | 4g |

**(2-2) Sensory evaluation of sandwiches using liquid seasonings**

The sandwiches of the Preparations, Comparative Preparation, and Reference Preparation mentioned above were subjected to sensory evaluation according to the following procedure.

Sensory evaluation was carried out by 6 sensory inspectors (the criteria for selecting the inspectors are as described above). The inspectors were held in the same room giving the same environment for the tasting and testing to go ahead. The sandwich samples were served warm as that is the best way for them to be eaten, in a random order. All inspectors tasted the sandwich samples in the same order. The inspectors then evaluated the sandwich samples on two evaluation criteria: hedonic attribute evaluation criteria and diagnostic evaluation criteria.

The hedonic attribute evaluation criteria consisted of six evaluation items: "Appearance"; "Aroma"; "Overall Flavor"; "Texture"; "Aftertaste"; and "Overall Acceptance." Each item was evaluated by the inspectors on the scale of from 0 to 10, 0 indicating "Extremely dislike" and 10 indicating "Extremely like." The scores of the 6 inspectors were averaged.

The diagnostic evaluation criteria consisted of seven evaluation items: "Strength of aroma of cheese"; "Strength of aroma of vegetable"; "Strength of overall flavor of cheese"; "Strength of overall flavor of vegetable"; "Balance between cheese and vegetable"; "Texture of melted cheese"; and "Amount of spice aftertaste". Each item was evaluated by the inspectors on the scale of from 1 to 5 indicated below, 3 being optimal evaluation. The scores of the 6 inspectors were averaged.

"Strength of aroma of cheese":

1= Nowhere near enough
2= A little too weak
3= Good
4= A little too much
5 = Far too much

"Strength of aroma of vegetable":

1= Nowhere near enough
2= A little too weak
3= Good
4= A little too much
5 = Far too much

"Strength of overall flavor of cheese":

1= Nowhere near enough
2= A little too weak
3= Good
4= A little too much
5 = Far too much

"Strength of overall flavor of vegetable":

1= Nowhere near enough
2= A little too weak
3= Good
4= A little too much
5 = Far too much

"Balance between cheese and vegetable":

1= Far too sweet
2= A little too sweet
3= Good
4= A little too tangy
5 = Far too tangy

"Texture of melted cheese":

1= Far too firm
2= A little too firm
3= Good
4= A little too soft
5 = Far too soft

"Amount of spice aftertaste":

1 = Too much spice
2= A little too much spice
3= Good
4= A little too low spice
5 = Too low spice

(2-3) **Results**

The results of the sensory evaluation are shown in the tables below.

Table 6

| Sandwich | Hedonic attribute evaluation | | | | | |
|---|---|---|---|---|---|---|
| | Appearance | Aroma | Overall Flavor | Texture | Aftertaste | Overall Acceptance |
| Comparative preparation 1 | 6.00 | 6.00 | 5.50 | 5.50 | 5.50 | 5.70 |
| Preparation 1 | 6.33 | 6.33 | 5.83 | 5.17 | 6.00 | 6.07 |
| Preparation 2 | 6.33 | 6.17 | 6.00 | 6.50 | 6.83 | 6.37 |
| Preparation 3 | 5.17 | 5.67 | 5.83 | 5.17 | 6.00 | 5.57 |
| Preparation 4 | 6.33 | 7.00 | 6.67 | 6.83 | 6.50 | 6.67 |
| Reference preparation | 5.17 | 5.83 | 6.83 | 7.00 | 7.00 | 6.37 |

Table 7

| Sandwich | Diagnostic evaluation | | | | | | |
|---|---|---|---|---|---|---|---|
| | Strength of aroma | | Strength of overall flavor | | Balance b/w cheese and vegetable | Texture of melted cheese | Amount of spice aftertaste |
| | Cheese | Liquid seasoning | Cheese | Liquid seasoning | | | |
| Comparative preparation 1 | 2.50 | 2.50 | 2.67 | 2.83 | 2.83 | 2.33 | 3.17 |
| Preparation 1 | 2.17 | 2.67 | 2.83 | 2.17 | 2.33 | 3.17 | 3.17 |
| Preparation 2 | 2.17 | 2.50 | 2.33 | 2.83 | 2.67 | 3.17 | 3.67 |
| Preparation 3 | 2.17 | 2.67 | 2.33 | 2.50 | 2.33 | 2.00 | 3.83 |
| Preparation 4 | 3.17 | 3.00 | 2.67 | 3.00 | 3.00 | 3.17 | 3.17 |
| Reference preparation | 2.67 | 2.50 | 2.67 | 2.33 | 2.17 | 3.17 | 3.17 |

The sandwiches of Preparations 1 to 4, which were prepared using the vegetable ingredient-containing liquid seasonings of Examples 1 to 4, respectively, were superior in overall evaluation as compared with the sandwich of Comparative Preparation 1, which were prepared using the vegetable ingredient-containing liquid seasoning of Comparative Example 1. In addition, the sandwiches of Preparations 2 and 4 in particular, which were prepared using the vegetable ingredient-containing liquid seasonings of Examples 2 and 4, respectively, were not inferior in overall evaluation as compared with the sandwich of Reference Preparation, which were prepared using foodstuffs containing components derived from dairy products and meat, the sandwich of Preparation 4 being even superior to Reference Preparation.

**[3. Analysis of Spices Added to Liquid Seasonings Containing Solid Vegetable Ingredients]**

The 9 spices were each added to the liquid seasoning base prepared in (1-1-1) above such that the final concentration of the spice was 0.5% by mass (i.e., 99.5% by mass of the liquid seasoning base + 0.5% by mass of each spice) to thereby prepare nine evaluation samples, which were subjected to sensory evaluation.

*Spices: ginger, cardamom, cinnamon, basil, parsley, coriander, nutmeg, black pepper, and cayenne pepper (all were commercial products with 3g to 16g contents: S & B).

The item evaluated in the sensory evaluation was the matching of the tastes of each spice and the liquid seasoning base, which was evaluated on the scale of from 1 to 5 indicated below. The evaluation was conducted by 4 inspectors (the criteria for selecting the inspectors are as described above). Prior to the evaluation, all inspectors evaluated the standard sample (the liquid seasoning base), and standardized the evaluation score based on the results. Each inspector scored each evaluation sample on the scale below, and the scores of the 4 inspectors were averaged.

*Matching of tastes:

5: Very good, with tastes matching perfectly.
4: Good, with tastes matching well.
3: Medium, with tastes matching moderately.
2: Not very good, with tastes scarcely matching.
1: Not good at all, with tastes incompatible with each other.

The results of the sensory evaluation are shown in the table below.

Table 8

| Sample | Spice | Evaluation |
|--------|-------|------------|
| 1 | Ginger | 3.75 |
| 2 | Cardamom | 4.75 |
| 3 | Cinnamon | 2 |
| 4 | Basil | 1.75 |
| 5 | Parsley | 1 |
| 6 | Coriander | 3 |
| 7 | Nutmeg | 4 |
| 8 | Black pepper | 4.75 |
| 9 | Cayenne pepper | 1.75 |

These results that among the spices tested, ginger, cardamom, nutmeg, and black pepper are found to well match the taste of the liquid seasoning base, and therefore have the potential to improve the taste of the liquid seasoning.

**Claims**

1.    A liquid seasoning comprising apple vinegar, apple juice and solid ingredients of vegetable,

wherein the liquid seasoning comprises

- apple vinegar in an amount of from 0.5 % to 10 % by mass; and

- apple juice in an amount of from 0.8 % to 16.0 % by mass,

wherein the liquid seasoning has

- a mass-to-volume ratio of 2-methoxy-4-ethylphenol of from 1.0 μg/L to 20 μg/L; and
- a mass-to-volume ratio of diethyl succinate of from 10 μg/L to 200 μg/L;

wherein the acetic acidity of the liquid seasoning is from 1.5 % to 8.0 % by mass with respect to the total volume of the liquid seasoning, and
wherein the mass-to-volume ratio of the 2-methoxy-4-ethylphenol, the mass-to-volume ratio of diethyl succinate and the acetic acidity of the liquid seasoning are determined by the methods as described in the description.

2.  The liquid seasoning as defined in claim 1, further comprising:

- 6-methyl-5-hepten-2-one in a mass-to-volume ratio, which is determined by the method as described in the description, of from 0.2 μg/L to 4.0 μg/L.

3.  The liquid seasoning as defined in claim 1 or 2, wherein
the ratio of the ingredients having a size of 3.0 mm or more in a state of being swelled in the seasoning liquid to the total mass of the liquid seasoning is from 10% to 70% by mass.

4.  The liquid seasoning as defined in any one of claims 1 to 3, further comprises one or more spices selected from: cardamom, black pepper, nutmeg, and ginger.

5.  The liquid seasoning as defined in any one of claims 1 to 4, wherein a 10-fold aqueous diluted solution of the liquid seasoning has an absorbance at a wavelength of 430 nm of 0.45 or higher.

6.  The liquid seasoning as defined in any one of claims 1 to 5, which does not contain any component of animal origin.

7.  Use of the liquid seasoning as defined in claim 6 as a substitute for a liquid seasoning containing one or more components of animal origin.

8.  Use according to claim 7 for vegetarian or vegan foods.

9.  A food product comprising a liquid seasoning as defined in any one of claims 1 to 6.

10. The food product as defined in claim 9, which is a vegetarian or vegan food.

11. A process for producing a liquid seasoning as defined in any one of claims 1 to 6; comprising the steps of:

(i) preparing a first fraction containing apple vinegar and apple juice;
(ii) preparing a second fraction containing solid ingredients of vegetable;
(iii) mixing the first fraction and the second fraction to prepare the liquid seasoning.

12. The process as defined in claim 11, wherein the apple vinegar in step (i) is produced via fermentation, and the mass-to-volume ratio of 2-methoxy-4-ethylphenol, the mass-to-volume ratio of diethyl succinate, and/or the acetic acidity of the apple vinegar are adjusted via fermentation in such a manner that the liquid seasoning prepared in step (iii) satisfies:

- a mass-to-volume ratio of 2-methoxy-4-ethylphenol of from 1.0 μg/L to 20 μg/L;
- a mass-to-volume ratio of diethyl succinate of from 10 μg/L to 200 μg/L; and
- the acetic acidity of the liquid seasoning of from 1.5 % to 8.0 % by mass with respect to the total volume of the liquid seasoning,

wherein the mass-to-volume ratio of the 2-methoxy-4-ethylphenol, the mass-to-volume ratio of diethyl succinate and the acetic acidity of the liquid seasoning are determined by the methods as described in the description.

13. The process as defined in claim 11, wherein 2-methoxy-4-ethylphenol, diethyl succinate, and/or acetic acid are added to the mixture in step (iii) in such a manner that the liquid seasoning prepared in step (iii) satisfies:

- a mass-to-volume ratio of 2-methoxy-4-ethylphenol of from 1.0 $\mu$g/L to 20 $\mu$g/L;
- a mass-to-volume ratio of diethyl succinate of from 10 $\mu$g/L to 200 $\mu$g/L; and
- the acetic acidity of the liquid seasoning of from 1.5 % to 8.0 % by mass with respect to the total volume of the liquid seasoning,

wherein the mass-to-volume ratio of the 2-methoxy-4-ethylphenol, the mass-to-volume ratio of diethyl succinate and the acetic acidity of the liquid seasoning are determined by the methods as described in the description.

**Patentansprüche**

1. Flüssiges Würzmittel, das Apfelessig, Apfelsaft und feste Inhaltsstoffe von Gemüse umfasst,

   wobei das flüssige Würzmittel Folgendes umfasst:

   Apfelessig in einer Menge von 0,5 bis 10 Massen-% und
   Apfelsaft in einer Menge von 0,8 bis 16,0 Massen-%;

   wobei das flüssige Würzmittel Folgendes aufweist:

   einen Masse-pro-Volumen-Anteil von 2-Methoxy-4-ethylphenol von 1,0 $\mu$g/l bis 20 $\mu$g/l und
   einen Masse-pro-Volumen-Anteil von Diethylsuccinat von 10 $\mu$g/l bis 200 $\mu$g/l;

   wobei der Essigsäure-Gehalt des flüssigen Würzmittels 1,5 bis 8,0 Massen-%, bezogen auf das Gesamtvolumen des flüssigen Würzmittels beträgt; und
   wobei der Masse-pro-Volumen-Anteil von 2-Methoxy-4-ethylphenol, der Masse-pro-Volumen-Anteil von Diethylsuccinat und der Essigsäure-Gehalt des flüssigen Würzmittels durch die in der Beschreibung beschriebenen Verfahren bestimmt werden.

2. Flüssiges Würzmittel wie in Anspruch 1 definiert, das weiters Folgendes umfasst:
   6-Methyl-5-hepten-2-on in einem Masse-pro-Volumen-Anteil, der durch das in der Beschreibung beschriebene Verfahren bestimmt wird, von 0,2 $\mu$g/l bis 4,0 $\mu$g/l.

3. Flüssiges Würzmittel wie in Anspruch 1 oder 2 definiert, wobei
   der Anteil an Inhaltsstoffen, die in einem Zustand, in dem sie in der Würzmittel-Flüssigkeit aufgequollen sind, eine Größe von 3,0 mm oder mehr aufweisen, an der Gesamtmasse des flüssigen Würzmittels 10 bis 70 Massen-% beträgt.

4. Flüssiges Würzmittel wie in einem der Ansprüche 1 bis 3 definiert, das weiters ein oder mehrere Gewürze umfasst, die aus den Folgenden ausgewählt sind: Kardamom, schwarzem Pfeffer, Muskatnuss und Ingwer.

5. Flüssiges Würzmittel wie in einem der Ansprüche 1 bis 4 definiert, wobei eine 10-fach mit Wasser verdünnte Lösung des flüssigen Würzmittels ein Absorptionsvermögen bei einer Wellenlänge von 430 nm von 0,45 oder mehr aufweist.

6. Flüssiges Würzmittel wie in einem der Ansprüche 1 bis 5 definiert, das keine Komponente tierischen Ursprungs enthält.

7. Verwendung eines flüssigen Würzmittels wie in Anspruch 6 definiert als Ersatz für ein flüssiges Würzmittel, das eine oder mehrere Komponenten tierischen Ursprungs enthält.

8. Verwendung nach Anspruch 7 für vegetarische oder vegane Lebensmittel.

9. Lebensmittelprodukt, das ein flüssiges Würzmittel wie in einem der Ansprüche 1 bis 6 definiert umfasst.

10. Lebensmittelprodukt wie in Anspruch 9 definiert, das ein vegetarisches oder veganes Lebensmittel ist.

11. Verfahren zur Herstellung eines flüssigen Würzmittels wie in einem der Ansprüche 1 bis 6 definiert, das die folgenden Schritte umfasst:

(i) das Herstellen einer ersten Fraktion, die Apfelessig und Apfelsaft enthält;

(ii) das Herstellen einer zweiten Fraktion, die feste Inhaltsstoffe von Gemüse enthält;

(iii) das Vermischen der ersten Fraktion und der zweiten Fraktion, um das flüssige Würzmittel herzustellen.

12. Verfahren wie in Anspruch 11 definiert, wobei der Apfelessig in Schritt (i) über Fermentation hergestellt wird und der Masse-pro-Volumen-Anteil von Diethylsuccinat und/oder die Essigsäuerlichkeit des Apfelessigs über Fermentation auf eine Weise eingestellt werden, dass das in Schritt (iii) hergestellte flüssige Würzmittel Folgendes erfüllt:

der Masse-pro-Volumen-Anteil von 2-Methoxy-4-ethylphenol beträgt 1,0 $\mu$g/l bis 20 $\mu$g/l,

der Masse-pro-Volumen-Anteil von Diethylsuccinat beträgt 10 $\mu$g/l bis 200 $\mu$g/l, und

der Essigsäure-Gehalt des flüssigen Würzmittels beträgt 1,5 bis 8,0 Massen-%, bezogen auf das Gesamtvolumen des flüssigen Würzmittels;

wobei der Masse-pro-Volumen-Anteil von 2-Methoxy-4-ethylphenol, der Masse-pro-Volumen-Anteil von Diethylsuccinat und der Essigsäure-Gehalt des flüssigen Würzmittels durch die in der Beschreibung beschriebenen Verfahren bestimmt werden.

13. Verfahren wie in Anspruch 11 definiert, wobei 2-Methoxy-4-ethylphenol, Diethylsuccinat und/oder Essigsäure zu dem Gemisch in Schritt (iii) so zugesetzt werden, dass das in Schritt (iii) hergestellte flüssige Würzmittel Folgendes erfüllt:

der Masse-pro-Volumen-Anteil von 2-Methoxy-4-ethylphenol beträgt 1,0 $\mu$g/l bis 20 $\mu$g/l,

der Masse-pro-Volumen-Anteil von Diethylsuccinat beträgt 10 $\mu$g/l bis 200 $\mu$g/l, und

der Essigsäure-Gehalt des flüssigen Würzmittels beträgt 1,5 bis 8,0 Massen-%, bezogen auf das Gesamtvolumen des flüssigen Würzmittels;

wobei der Masse-pro-Volumen-Anteil von 2-Methoxy-4-ethylphenol, der Masse-pro-Volumen-Anteil von Diethylsuccinat und der Essigsäure-Gehalt des flüssigen Würzmittels durch die in der Beschreibung beschriebenen Verfahren bestimmt werden.

## Revendications

1. Assaisonnement liquide comprenant du vinaigre de pomme, du jus de pomme et des ingrédients végétaux solides,

dans lequel l'assaisonnement liquide comprend

- du vinaigre de pomme en une quantité de 0,5 % à 10 % en masse ; et
- du jus de pomme en une quantité de 0,8 % à 16,0 % en masse,
- dans lequel l'assaisonnement liquide présente
- un rapport masse/volume de 2-méthoxy-4-éthylphénol de 1,0 $\mu$g/L à 20 $\mu$g/L ; et
- un rapport masse/volume de succinate de diéthyle de 10 $\mu$g/L à 200 $\mu$g/L ;

dans lequel l'acidité acétique de l'assaisonnement liquide est de 1,5 % à 8,0 % en masse par rapport au volume total de l'assaisonnement liquide, et

dans lequel le rapport masse/volume du 2-méthoxy-4-éthylphénol, le rapport masse/volume du succinate de diéthyle et l'acidité acétique de l'assaisonnement liquide sont déterminés par les procédés tels que décrits dans la description.

2. Assaisonnement liquide selon la revendication 1, comprenant en outre :

- du 6-méthyl-5-heptén-2-one dans un rapport masse/volume, qui est déterminé par le procédé tel que décrit dans la description, de 0,2 $\mu$g/L à 4,0 $\mu$g/L.

3. Assaisonnement liquide tel que défini dans la revendication 1 ou 2, dans lequel le rapport des ingrédients présentant une taille de 3,0 mm ou plus à l'état gonflé dans le liquide d'assaisonnement à la masse totale de l'assaisonnement liquide est de 10 % à 70 % en masse.

4. Assaisonnement liquide selon l'une quelconque des revendications 1 à 3, comprenant en outre une ou plusieurs épices choisies parmi : la cardamome, le poivre noir, la noix de muscade et le gingembre.

5. Assaisonnement liquide selon l'une quelconque des revendications 1 à 4, dans lequel une solution aqueuse diluée 10 fois de l'assaisonnement liquide présente une absorbance à une longueur d'onde de 430 nm de 0,45 ou plus.

6. Assaisonnement liquide selon l'une quelconque des revendications 1 à 5, qui ne contient aucun composant d'origine animale.

7. Utilisation de l'assaisonnement liquide selon la revendication 6 comme substitut à un assaisonnement liquide contenant un ou plusieurs composants d'origine animale.

8. Utilisation selon la revendication 7 pour des aliments végétariens ou végétaliens.

9. Produit alimentaire comprenant un assaisonnement liquide selon l'une quelconque des revendications 1 à 6.

10. Produit alimentaire selon la revendication 9, qui est un aliment végétarien ou végétalien.

11. Procédé de production d'un assaisonnement liquide selon l'une quelconque des revendications 1 à 6, comprenant les étapes consistant à :

    (i) préparer une première fraction contenant du vinaigre de pomme et du jus de pomme ;
    (ii) préparer une seconde fraction contenant des ingrédients végétaux solides ;
    (iii) mélanger la première fraction et la seconde fraction pour préparer l'assaisonnement liquide,

12. Procédé dans la revendication 11, dans lequel le vinaigre de pomme dans l'étape (i) est produit par fermentation, et le rapport masse/volume de 2-méthoxy-4-éthylphénol, le rapport masse/volume de succinate de diéthyle, et/ou l'acidité acétique du vinaigre de pomme sont ajustés par fermentation de telle manière que l'assaisonnement liquide préparé dans l'étape (iii) satisfasse :

    - un rapport masse/volume de 2-méthoxy-4-éthylphénol de 1,0 µg/L à 20 µg/L ;
    - un rapport masse/volume de succinate de diéthyle de 10 µg/L à 200 µg/L ; et
    - l'acidité acétique de l'assaisonnement liquide de 1,5 % à 8,0 % en masse par rapport au volume total de l'assaisonnement liquide,

    dans lequel le rapport masse/volume du 2-méthoxy-4-éthylphénol, le rapport masse/volume du succinate de diéthyle et l'acidité acétique de l'assaisonnement liquide sont déterminés par les procédés tels que décrits dans la description.

13. Procédé dans la revendication 11, dans lequel le 2-méthoxy-4-éthylphénol, le succinate de diéthyle et/ou l'acide acétique sont ajoutés au mélange dans l'étape (iii) de telle manière que l'assaisonnement liquide préparé dans l'étape (iii) satisfasse :

    - un rapport masse/volume de 2-méthoxy-4-éthylphénol de 1,0 µg/L à 20 µg/L ;
    - un rapport masse/volume de succinate de diéthyle de 10 µg/L à 200 µg/L ; et
    - l'acidité acétique de l'assaisonnement liquide de 1,5 % à 8,0 % en masse par rapport au volume total de l'assaisonnement liquide,

    dans lequel le rapport masse/volume du 2-méthoxy-4-éthylphénol, le rapport masse/volume du succinate de diéthyle et l'acidité acétique de l'assaisonnement liquide sont déterminés par les procédés tels que décrits dans la description.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIZKAN EURO**. *Apple cider vinegar*, November 2019